# EUROPEAN PATENT SPECIFICATION

(11) **EP 2 806 764 B1**
(45) Date of publication and mention of the grant of the patent: **27.05.2020**
(21) Application number: 13700128.5
(22) Date of filing: 08.01.2013
(51) Int. Cl.: F16B 9/02, A47B 13/02, F16B 12/44

(54) **HIDDEN DEVICE FOR FIXING A LEG TO A SURFACE OF A PIECE OF FURNITURE**
VERSTECKTE VORRICHTUNG ZUM BEFESTIGEN EINES FUSSES AN EINER OBERFLÄCHE EINES MÖBELSTÜCKS
DISPOSITIF CACHÉ DESTINÉ À FIXER UN PIED À UNE SURFACE D'UN MEUBLE

(30) Priority: 24.01.2012 IT MI20120072
(43) Date of publication of application: 03.12.2014
(73) Proprietor: Leonardo S.r.L., 22060 Figino Serenza (IT)
(72) Inventor: CATTANEO, Carlo, 22060 Figino Serenza Como (IT)
(74) Representative: Martegani, Franco
(86) International application number: PCT/EP2013/000041
(87) International publication number: WO 2013/110432

(56) References cited:
- EP-A1- 0 847 715
- EP-A1- 1 279 353
- DE-U1- 9 205 119
- DE-U1- 9 421 514
- FR-A3- 2 443 607

## Description

The present invention relates to a hidden device for stably fixing a leg to a surface of a piece of furniture, for example a table.

Known devices for firmly connecting a leg to a surface of a table consist of an expandable connector comprising means for fixing it to the surface of the table. Said connector is inserted at the hollow top of the leg and connected thereto by its expansion obtained by means of an expanding element which can be controlled outside the leg.

A device of this type is described, for example, in European patent EP 1279353 to which reference should be made for further clarifications.

Even if the functioning of devices of this type is completely satisfactory, some of the current requirements for being completely hidden from sight are not met.

In these known devices, in fact, at least the means for connecting the device to the underlying surface of the supporting plane, are completely visible, creating an aesthetic effect that is not always pleasant.

A general objective of the present invention is to overcome the above-mentioned drawback of the known art, by providing a device for fixing a leg to the surface of a piece of furniture, of the type comprising an expandable connector, completely hidden from sight. This objective is achieved by a device having the characteristics specified in claim 1 and the dependent claims enclosed herewith.

The structural and functional characteristics of the invention and its advantages with respect to the known art will appear more evident from the following description, referring to the enclosed drawings that illustrate embodiments of the same invention.

In the drawings:
- figure 1 is an enlarged perspective view, partially broken and sectioned, illustrating a fixing device according to the invention, assembled in an operative condition;
- figure 2 is an exploded view of the device of figure 1, without the leg of the table;
- figure 3 is a vertical section of the device in the condition of figure 1;

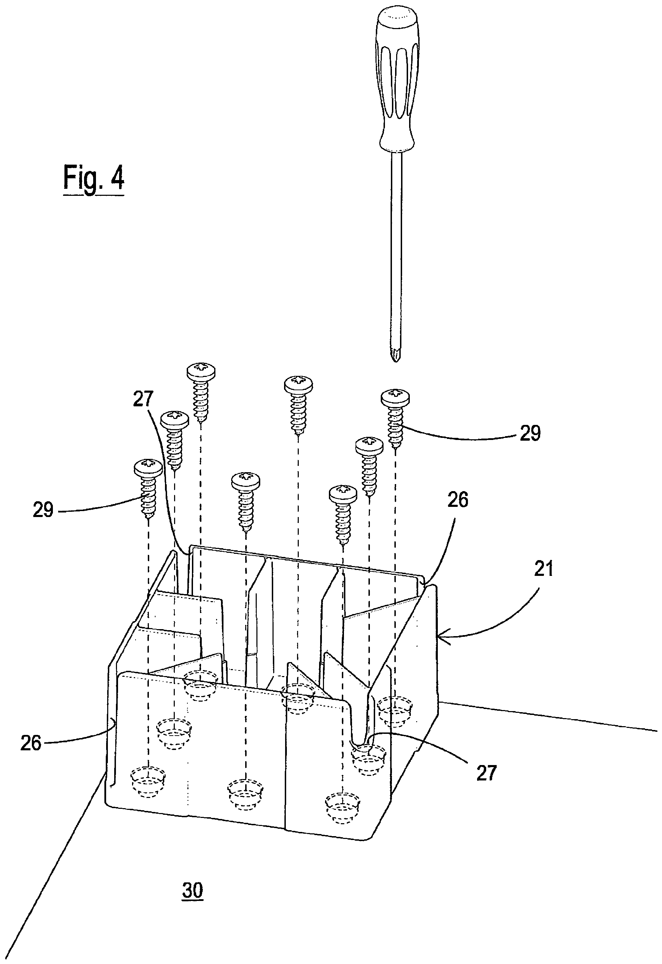

- figure 4 is a perspective view of the expandable box-shaped body of the device in a fixing phase to the surface of a table.
- figures 5 and 6 are two perspective views illustrating the insertion and fixing phases of the leg to the expandable connector;
- figures 7 and 8 are two perspective views from above of the expandable box-shaped body of the device according to two different views;
- figure 9 is a plan view from below of the box-shaped body;
- figure 10 is a plan view from above of the box-shaped body;
- figures 11 and 12 are two raised views of the box-shaped body;
- figure 13 is a perspective view of the expanding element inserted in the expandable box-shaped body;
- figure 14 is a plan view from above of the element of figure 13;
- figure 15 is a plan view from below of the element of figure 13;
- figures 16 and 17 are two raised views of the element of figure 13; and
- figures 18 and 19 are two perspective views showing a table with legs fixed to the supporting surface, using the hidden device according to the invention.

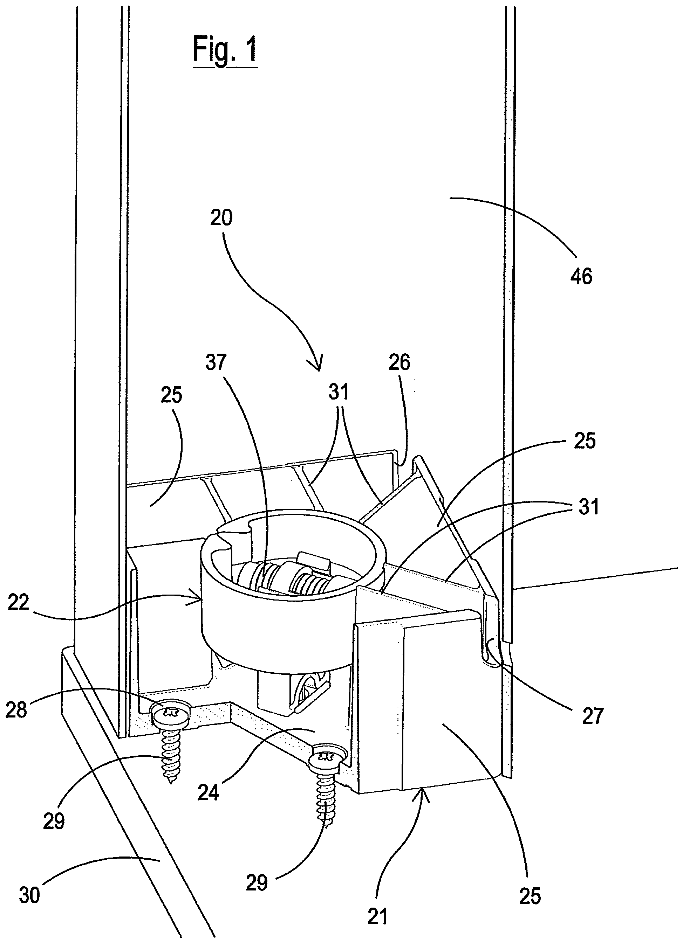

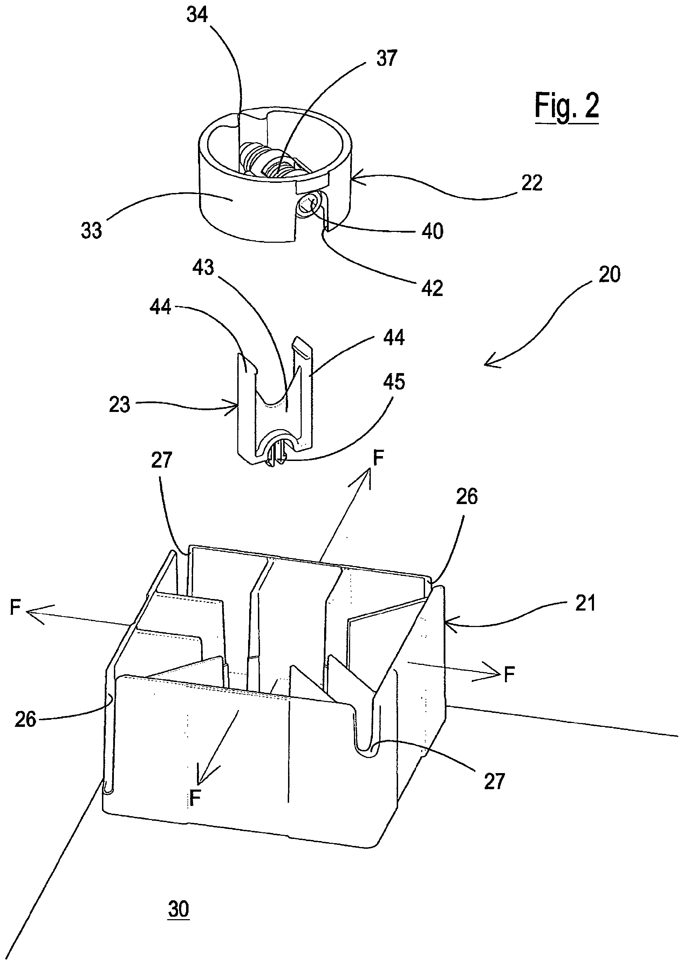

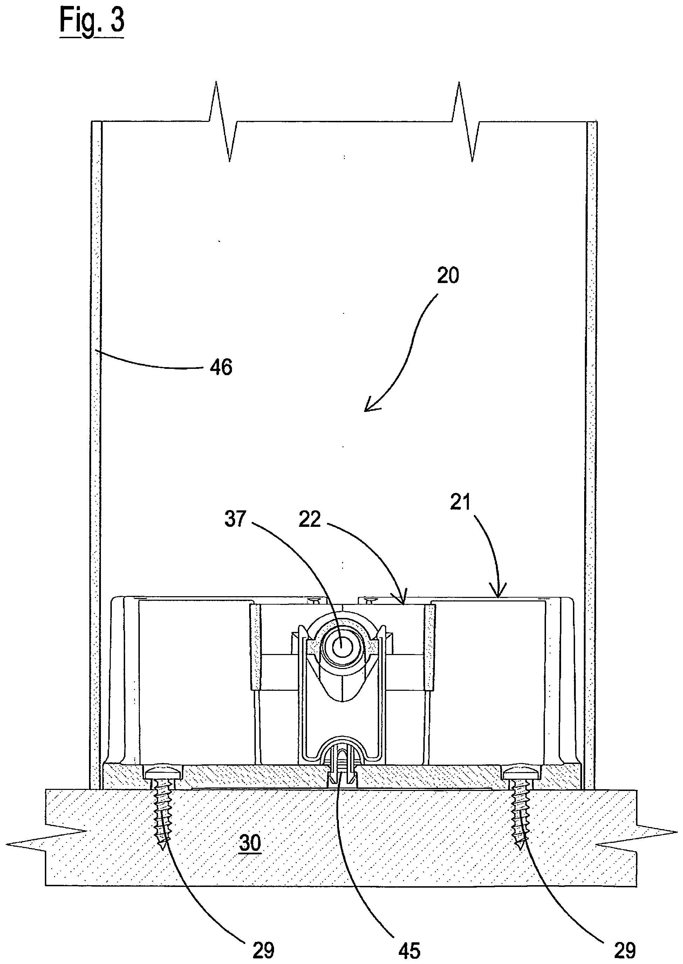

With reference, first of all, to figures 1-3 of the drawings, the hidden device according to the invention is indicated as a whole by 20 and structurally composed of the following three components: an outer expandable box-shaped body 21, an expanding element 22 - assembled inside said box-shaped body -, and a possible support 23 for said expanding element 22, which has the function of positioning the element 22 at the desired height with respect to the body 21.

In the example illustrated, the body 21 has a substantially parallelepiped form, but may have other forms, for example cylindrical or prismatic.

As can be clearly seen from the figures, the body 21 has a base 24 and side walls 25.

One or more of said walls 25 are preferably tapered (figure 1) and are radially yielding (expandable) in the directions of the arrows F thanks to the presence of pairs of notches 26, 27 inserted on the diametrically opposed edges. The notches 26 and 27 can have different depths.

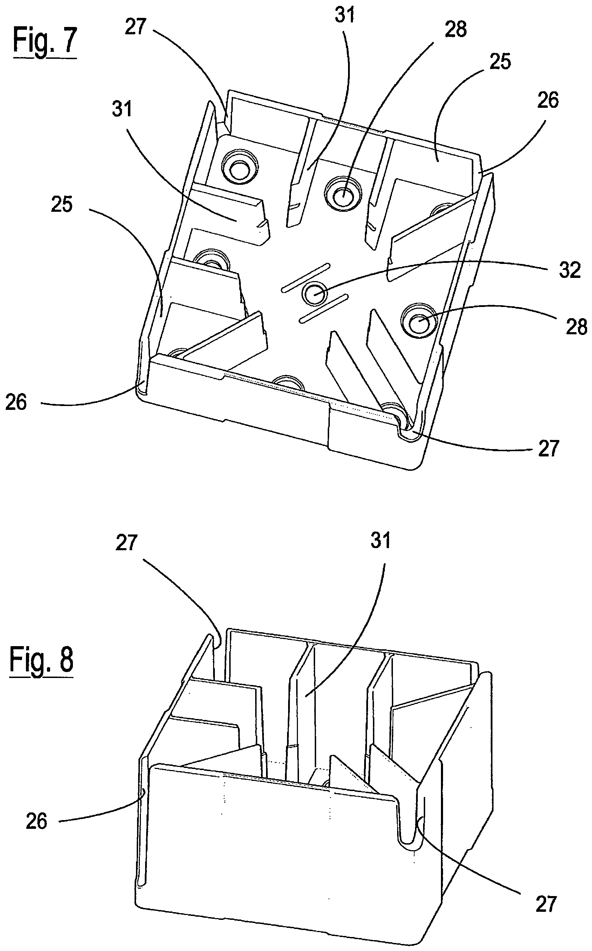

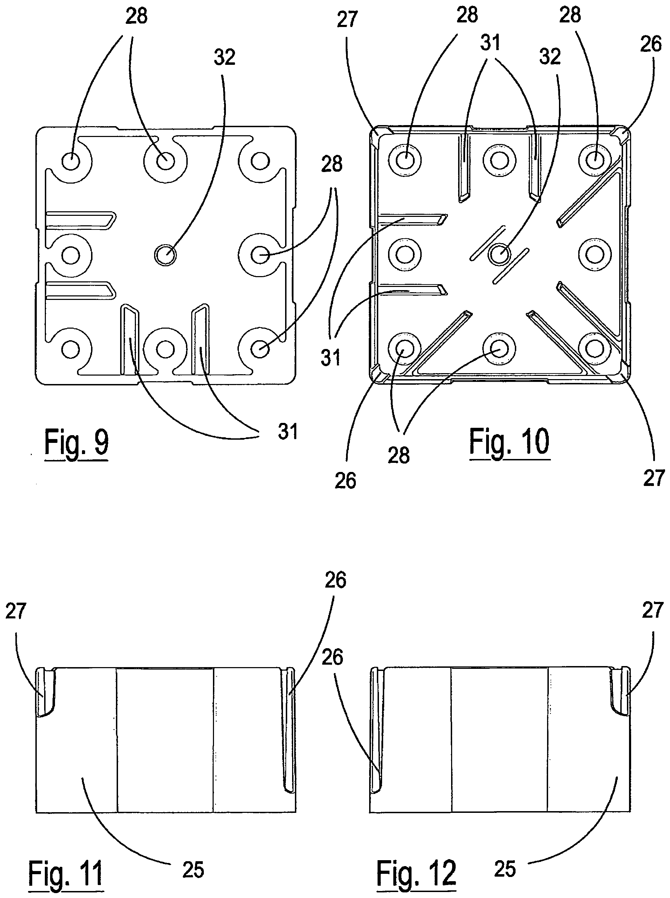

As can be clearly seen in figures 1, 7, 9 and 10 of the drawings, the base 24 of the body 21 characteristically has a plurality of holes 28 for the passage of fixing screws 29 of body 21 to the underlying surface of a surface 30, for example a table (figures 1, 18 and 19).

A plurality of ribs 31 also extends inwardly from the walls 25, defining a stable positioning seat of the expanding element 22, and whose function is to operatively connect the latter - as explained hereunder - to the same walls 25.

Finally, in the center of the base 24, there is also a hole 32 for connecting the support 23 inside the body 21.

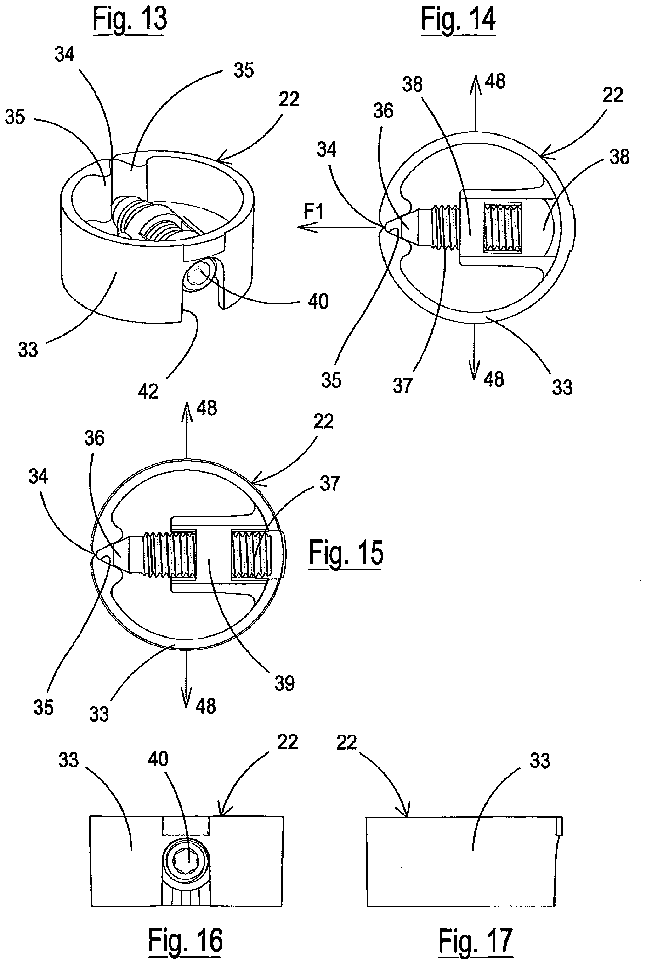

With reference to figures 13-17, the expanding element 22, in the example illustrated, consists of a cylindrical casing 33 split along one of its generatrices 34, so that it can expand radially.

For this purpose, in correspondence with said generatrix 34, diverging walls 35 extend inwardly from said casing 33, a conical tip 36, of a manoeuvring grain 37 being wedged between said walls 35.

As can be clearly seen in Figures 13-17 of the drawings, said grain 17 is screwed through corresponding threaded seats 38, 39 of the casing 33 and is provided, at the end opposite to the tip 36, with a seat 40 for a manoeuvring key 41. The seat 40 is accessible through an opening 42 of the casing 33. With reference to figures 1-3, the support 23 consists of a portal 43 with side uprights 44 on which the expanding element 22 rests. A pin 45 is also envisaged at the bottom of the portal 43, which is elastically yieldable, for the click-insertion of the support 23 in the opening 32 of the base 24 of the body 21.

The use of the device according to the invention is clear from what is described above with reference to the figures and, in short, is the following.

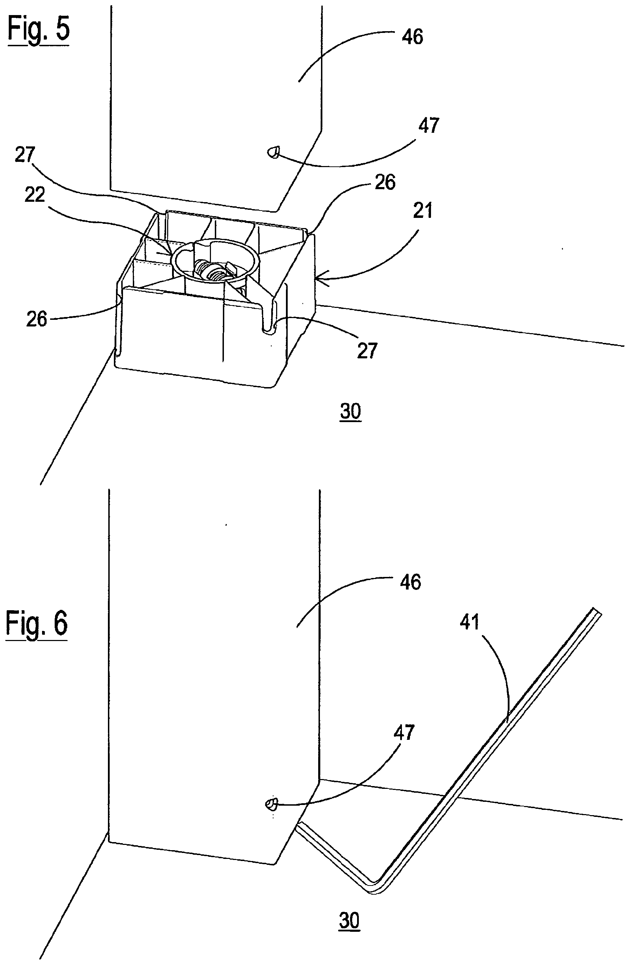

The box-shaped body 21 is fixed, by means of the screws 29, to the surface beneath the plane 30, and the support 23 is assembled inside the same together with the expanding element 22 which is housed between the ribs 31 (figure 5).

The end of a leg 46, which must be stably fixed to the surface 30, is then inserted on the box-shaped body 21. For this purpose, the leg 46 has a plan section substantially corresponding to that of the body 21, and has a hole 47 on an edge (which is that facing the inside of the table) which is aligned with the opening 42 of the expanding element 22. In this way, it is possible to have access to the seat 40 of the manoeuvring grain 37, by introducing the key 41 through the hole 47. The grain 37 can thus be screwed in the direction of the arrow F1 (figure 14) so as to wedge the tip 36 between the opposite walls 35, causing the expansion of the element 22 in the direction of the arrows 48 (figures 14, 15). The expanding element 22 consequently acts on the walls 25 of the body 21, through the ribs 31, opening them outwardly, so as to firmly engage them (by friction) against the inner surfaces of the leg 46.

The leg 46 is thus stably constrained to the body 21, and consequently to the surface 30 of the table.

The unscrewing of the grain 37 obviously allows disengagement of the body 21 from the leg 46, and therefore the detachment of the latter from the body itself 21.

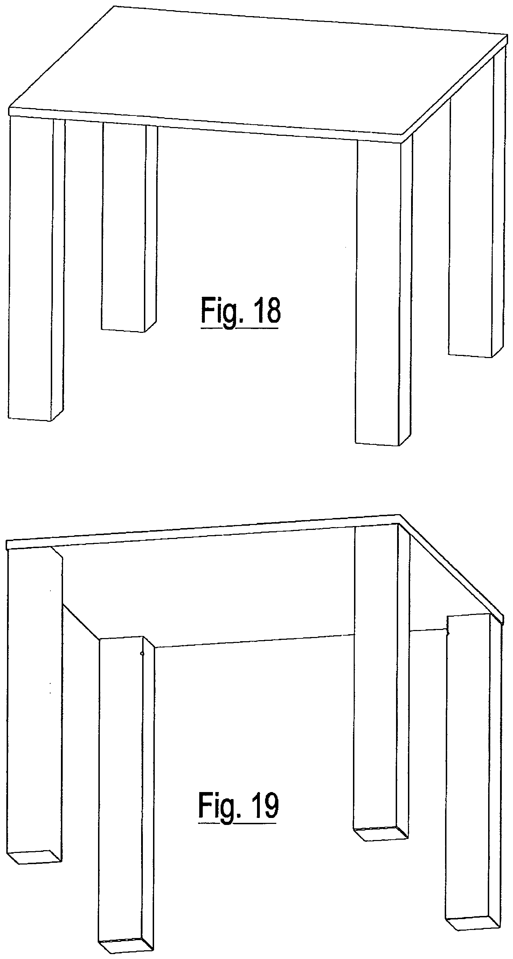

From figures 18 and 19 of the drawings, it is evident that the fixing device according to the invention, contrary to those of the known art, is completely hidden from sight, as desired.

The objective mentioned in the preamble of the description has therefore been achieved.

The protection scope of the present invention is defined by the enclosed claims.

## Claims

1. A device for fixing a leg (46) to a surface (30) of a piece of furniture, of the type comprising, in combination: an expandable box-shaped body (21) on which an end of said leg (46), having a plan section substantially corresponding to that of the body (21), can be inserted, fixing means (24, 28, 29) for fixing said body (21) to said surface (30), an expanding element (22), accessible from the outside, housed inside said body (21) for expanding it against the inner surfaces of said leg (46), in a condition of reciprocal stable coupling, **characterized in that** said fixing means (24, 28, 29) are all contained inside said expandable box-shaped body (21) so as to be invisible.

2. The device according to claim 1, **characterized in that** said fixing means consist of a base (24) of said body (21) and a plurality of pass-through holes (28) situated in said base (24) for the passage of fixing screws (29) .

3. The device according to claim 1, **characterized in that** said box-shaped body (21) has a substantially parallelepiped form with a base (24) and radially yielding side walls (25).

4. The device according to claim 3, **characterized in that** said walls (25) have pairs of notches (26,27) positioned on diametrically opposite edges.

5. The device according to claim 4, **characterized in that** said notches (26,27) can have a different depth.

6. The device according to claim 3, **characterized in that** one or more of said walls (25) are tapered.

7. The device according to claim 3, **characterized in that** a plurality of ribs (31) extend inwardly from said walls (25), identifying a stable positioning seat of the above expanding element (22) and for the operative connection of the element (22) itself with the walls (25).

8. The device according to claim 1, **characterized in that** said that expanding element (22) consists of a cylindrical cover (33) which is split along one of its generatrices (34), so that it can expand radially.

9. The device according to claim 8, **characterized in that** diverging walls (35) extend inwardly from the cover (33), in correspondence with said generatrix (34), and a conical tip (36) of a manoeuvring grain (37) accessible from the outside, is inserted between said walls.

10. The device according to claim 1, **characterized in that** said expanding element (22) rests on a support (23) envisaged in said box-shaped body (21).

## Patentansprüche

1. Vorrichtung zum Befestigen eines Beins (46) an einer Fläche (30) eines Möbelstücks des Typs, der in Kombination umfasst: einen ausdehnbaren kastenförmigen Körper (21), in den ein Ende des Beins (46), das eine Grundfläche aufweist, die im Wesentlichen der des Körpers (21) entspricht, eingesetzt werden kann, Befestigungsmittel (24, 28, 29) zum Befestigen des Körpers (21) an der Fläche (30), ein Ausdehnungselement (22), das von außen zugänglich und in dem Körper (21) untergebracht ist, so dass es gegen die Innenflächen des Beins (46) in einem Zustand reziproker stabiler Kopplung ausgedehnt wird, **dadurch gekennzeichnet, dass** die Befestigungsmittel (24, 28, 29) alle in dem ausdehnbaren kastenförmigen Körper (21) enthalten sind, um unsichtbar zu sein.

2. Vorrichtung nach Anspruch 1, **dadurch gekennzeichnet, dass** das Befestigungsmittel aus einer Basis (24) des Körpers (21) und einer Mehrzahl von Durchgangslöchern (28) besteht, die in der Basis (24) für den Durchgang von Befestigungsschrauben (29) angeordnet sind.

3. Vorrichtung nach Anspruch 1, **dadurch gekennzeichnet, dass** der kastenförmige Körper (21) im Wesentlichen eine Parallelepipedform mit einer Basis (24) und radial nachgiebigen Seitenwänden (25) aufweist.

4. Vorrichtung nach Anspruch 3, **dadurch gekennzeichnet, dass** die Wände (25) Paare von Kerben (26, 27) aufweisen, die an diametral gegenüberliegenden Rändern positiniert sind.

5. Vorrichtung nach Anspruch 4, **dadurch gekennzeichnet, dass** die Kerben (26, 27) eine unterschiedliche Tiefe aufweisen können.

6. Vorrichtung nach Anspruch 3, **dadurch gekennzeichnet, dass** sich eine oder mehrere der Wände (25) verjüngen.

7. Vorrichtung nach Anspruch 3, **dadurch gekennzeichnet, dass** sich eine Mehrzahl von Rippen (31) von den Wänden (25) nach innen erstrecken, wodurch ein stabiler Positionierungssitz des obigen Ausdehnungselements (22) und für die Wirkverbindung des Elements (22) selbst mit den Wänden (25) festgelegt wird.

8. Vorrichtung nach Anspruch 1, **dadurch gekennzeichnet, dass** das Ausdehnungselement (22) aus einer zylindrischen Abdeckung (33) besteht, die entlang einer ihrer Erzeugenden (34) aufgeteilt ist, so dass es sich radial ausdehnen kann.

9. Vorrichtung nach Anspruch 8, **dadurch gekennzeichnet, dass** sich divergierende Wände (35) entsprechend der Erzeugenden (34) von der Abdeckung (33) nach innen erstrecken und eine konische Spitze (36) einer Manövriermadenschraube (37), die von außen zugänglich ist, zwischen die Wände (35) eingesetzt ist.

10. Vorrichtung nach Anspruch 1, **dadurch gekennzeichnet, dass** das Ausdehnungselement (22) auf einem Träger (23) ruht, der in dem kastenförmigen Körper (21) vorgesehen ist.

## Revendications

1. Dispositif destiné à fixer un pied (46) à une surface (30) d'un meuble, du type comprenant, en combinaison, un corps extensible en forme de boîtier (21) sur lequel une extrémité dudit pied (46) ayant une section plane correspondant sensiblement à celle du corps (21) peut être insérée, des moyens de fixation (24, 28, 29) pour fixer ledit corps (21) à ladite surface (30), un élément d'extension (22) accessible de l'extérieur et logé à l'intérieur dudit corps (21) pour provoquer son extension contre les surfaces intérieures dudit pied (46), dans une situation d'accouplement stable réciproque, **caractérisé en ce que** lesdits moyens de fixation (24, 28, 29) sont tous contenus à l'intérieur dudit corps extensible en forme de boîtier (21) de sorte à être invisibles.

2. Dispositif selon la revendication 1, **caractérisé en ce que** lesdits moyens de fixation sont constitués d'un socle (24) dudit corps (21) et d'une pluralité de trous de passage (28) situés dans ledit socle (24) pour le passage de vis de fixation (29).

3. Dispositif selon la revendication 1, **caractérisé en ce que** ledit corps en forme de boîtier (21) a une forme sensiblement parallélépipédique avec un socle (24) et des parois latérales s'écartant radialement (25).

4. Dispositif selon la revendication 3, **caractérisé en ce que** lesdites parois (25) ont des paires d'encoches (26, 27) positionnées sur des bords diamétralement opposés.

5. Dispositif selon la revendication 4, **caractérisé en ce que** lesdites encoches (26, 27) peuvent avoir une profondeur différente.

6. Dispositif selon la revendication 3, **caractérisé en ce qu'**une ou plusieurs desdites parois (25) sont effilées.

7. Dispositif selon la revendication 3, **caractérisé en ce qu'**une pluralité de nervures (31) s'étendent vers l'intérieur depuis lesdites parois (25), créant un siège de positionnement stable de l'élément d'extension (22) posé dessus et permettant le raccordement opérationnel de l'élément (22) lui-même avec les parois (25).

8. Dispositif selon la revendication 1, **caractérisé en ce que** ledit élément d'extension (22) est constitué d'un capot cylindrique (33) qui est fendu le long d'une de ses génératrices (34), de sorte qu'il peut s'étendre radialement.

9. Dispositif selon la revendication 8, **caractérisé en ce que** des parois divergentes (35) d'étendent vers l'intérieur depuis le capot (33), en correspondance avec ladite génératrice (34), et qu'une pointe conique (36) d'une tige filetée de manœuvre (37) accessible de l'extérieur est insérée entre lesdites parois.

10. Dispositif selon la revendication 1, **caractérisé en ce que** ledit élément d'extension (22) repose sur un support (23) prévu dans ledit corps en forme de boîtier (21).
